(19) Europäisches Patentamt
European Patent Office
Office européen des brevets

(11) **EP 1 763 547 B1**

(12) **EUROPEAN PATENT SPECIFICATION**

(45) Date of publication and mention
of the grant of the patent:
**04.05.2011 Bulletin 2011/18**

(51) Int Cl.:
***C08F 287/00*** (2006.01)   ***G02B 1/04*** (2006.01)

(21) Application number: **05770095.7**

(22) Date of filing: **29.06.2005**

(86) International application number:
**PCT/EP2005/007009**

(87) International publication number:
**WO 2006/002897 (12.01.2006 Gazette 2006/02)**

(54) **SILICONE HYDROGELS WITH LATHABILITY AT ROOM TEMPERATURE**

BEI RAUMTEMPERATUR LANZETTIERBARE SILIKONHYDROGELE

HYDROGELS DE SILICONE POUVANT ETRE TAILLES A TEMPERATURE AMBIANTE

(84) Designated Contracting States:
**AT BE BG CH CY CZ DE DK EE ES FI FR GB GR HU IE IS IT LI LT LU MC NL PL PT RO SE SI SK TR**

(30) Priority: **30.06.2004 US 583994 P**

(43) Date of publication of application:
**21.03.2007 Bulletin 2007/12**

(73) Proprietor: **Novartis AG**
**4056 Basel (CH)**

(72) Inventors:
• **PHELAN, John, Christopher**
**Gurnee, IL 60031 (US)**

• **QUINN, Michael, Hugh**
**Valparaiso, IN 46383 (US)**
• **DOMSCHKE, Angelika, Maria**
**Duluth, GA 30096 (US)**

(74) Representative: **Bohest AG**
**Postfach 160**
**4003 Basel (CH)**

(56) References cited:
**EP-A- 1 043 605**   **WO-A-93/09154**
**WO-A-02/097481**   **US-A- 5 760 100**
**US-A- 5 776 999**   **US-A- 5 789 461**
**US-A1- 2003 008 154**

**Description**

The present invention is related to a formulation for making silicone hydrogel capable of being lathed at room temperature and silicone hydrogel materials prepared therefrom.

BACKGROUND OF THE INVENTION

Contact lenses are widely used for correcting many different types of vision deficiencies. These include low-order monochromatic aberrations such as defocus (near-sightedness or myopia and far-sightedness or hypermetropia), astigmatism, prism, and defects in near range vision usually associated with aging (presbyopia). Contact lenses must allow oxygen from the surrounding air (i.e., oxygen) to reach the cornea because the cornea does not receive oxygen from the blood supply like other tissue. If sufficient oxygen does not reach the cornea, corneal swelling occurs. Extended periods of oxygen deprivation cause the undesirable growth of blood vessels in the cornea. "Soft" contact lenses conform closely to the shape of the eye, so oxygen cannot easily circumvent the lens. Thus, soft contact lenses must allow oxygen to diffuse through the lens to reach the cornea, namely having a relatively high oxygen transmissibility (i.e., oxygen permeability over the lens thickness) from the outer surface to the inner surface to allow sufficient oxygen permeate through the lens to the cornea and to have minimal adverse effects on corneal health. High oxygen permeable silicone hydrogel materials have been developed to fulfill such requirements for making contact lenses capable of providing corneal health benefits, such as, for example, Focus NIGHT & DAY™ (CIBA VISION).

Currently available silicone Hydrogels are typically formed of a copolymer of a polymerizable mixture including at least one hydrophilic monomer, at least one silicone-containing monomer or macromer, and a solvent which ensures optimal miscibility between the at least one hydrophilic monomer and the at least one silicone-containing monomer or macromer. Although those silicone hydrogel materials are suitable for producing contact lenses having a high oxygen permeability according to full molding processes involving disposable molds, they can only be lathed at low temperature because of their softness and/or stickiness and they are not suitable for producing made-to-order (MTO) or customized contact lenses due to the high cost associated with low temperature lathing. MTO or customized contact lenses, which are typically made by directly lathing, can match a patient's prescription and/or have a base curve desired by the patient. A copending U.S. patent application disclosed that when being subjected to an additional thermal process, currently available silicone hydrogel materials may be lathed at room temperature. It would still be desirable for a silicone hydrogel material that can be lathed at room temperature without an additional thermal process.

Besides its poor lathability at room temperature, a currently available silicone hydrogel material may have a relatively high level of extractable chemicals present in the silicone hydrogel. Because of the presence of extractable chemicals, contact lenses made of such silicone hydrogel material need to be subjected to a costly extraction process and then to a hydration process. It would be desirable to have a silicone hydrogel material having a relatively low level of extractable chemicals.

Therefore, there are needs for silicone hydrogel materials capable of being lathed at room temperature and/or having minimal level of extractable chemicals present therein. There are also needs for formulations for making those silicone hydrogel materials.

SUMMARY OF THE INVENTION

The present invention, in one aspect, provides a silicone hydrogel material according to claim 1.
The present invention, in another aspect, provides a contact lens according to claim 11.

DETAILED DESCRIPTION OF EMBODIMENTS OF THE INVENTION

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well known and commonly employed in the art.

An "ophthalmic device", as used herein, refers to a contact lens (hard or soft), an intraocular lens, a corneal onlay, other ophthalmic devices (e.g., stents, glaucoma shunt, or the like) used on or about the eye or ocular vicinity.

"Contact Lens" refers to a structure that can be placed on or within a wearer's eye. A contact lens can correct, improve, or alter a user's eyesight, but that need not be the case. A contact lens can be of any appropriate material known in the art or later developed, and can be a soft lens, a hard lens, or a hybrid lens. Typically, a contact lens has an anterior surface and an opposite posterior surface and a circumferential edge where the anterior and posterior surfaces are tapered off.

The "front or anterior surface" of a contact lens, as used herein, refers to the surface of the lens that faces away from the eye during wear. The anterior surface, which is typically substantially convex, may also be referred to as the front curve of the lens.

The "rear or posterior surface" of a contact lens, as used herein, refers to the surface of the lens that faces towards the eye during wear. The rear surface, which is typically substantially concave, may also be referred to as the base curve of the lens.

"Ocular environment", as used herein, refers to ocular fluids (e.g., tear fluid) and ocular tissue (e.g., the cornea) which may come into intimate contact with a contact lens used for vision correction, drug delivery, wound healing, eye color modification, or other ophthalmic applications.

A "hydrogel" refers to a polymeric material which can absorb at least 10 percent by weight of water when it is fully hydrated. Generally, a hydrogel material is obtained by polymerization or copolymerization of at least one hydrophilic monomer in the presence of or in the absence of additional monomers and/or macromers.

A "silicone hydrogel" refers to a hydrogel obtained by copolymerization of a polymerizable composition comprising at least one silicone-containing vinylic monomer or at least one silicone-containing macromer.

"Hydrophilic," as used herein, describes a material or portion thereof that will more readily associate with water than with lipids.

As used herein, "actinically" in reference to curing or polymerizing of a polymerizable composition or material means that the curing (e.g., crosslinked and/or polymerized) is performed by actinic irradiation, such as, for example, UV irradiation, ionized radiation (e.g. gamma ray or X-ray irradiation), microwave irradiation, and the like. Thermal curing or actinic curing methods are well-known to a person skilled in the art.

A "prepolymer" refers to a starting polymer which can be cured (e.g., crosslinked and/or polymerized) actinically or thermally or chemically to obtain a crosslinked and/or polymerized polymer having a molecular weight much higher than the starting polymer. A "crosslinkable prepolymer" refers to a starting polymer which can be crosslinked upon actinic radiation to obtain a crosslinked polymer having a molecular weight much higher than the starting polymer.

A "monomer" means a low molecular weight compound that can be polymerized. Low molecular weight typically means average molecular weights less than 700 Daltons.

A "vinylic monomer", as used herein, refers to a low molecular weight compound that has an ethylenically unsaturated group and can be polymerized actinically or thermally. Low molecular weight typically means average molecular weights less than 700 Daltons.

The term "olefinically unsaturated group" is employed herein in a broad sense and is intended to encompass any groups containing at least one >C=C< group. Exemplary ethylenically unsaturated groups include without limitation acryloyl, methacryloyl, allyl, vinyl, styrenyl, or other C=C containing groups.

A "hydrophilic vinylic monomer", as used herein, refers to a vinylic monomer which is capable of forming a homopolymer that is water-soluble or can absorb at least 10 percent by weight water.

A "hydrophobic vinylic monomer", as used herein, refers to a vinylic monomer which is capable of forming a homopolymer that is insoluble in water and can absorb less than 10 percent by weight water.

A "macromer" refers to a medium to high molecular weight compound or polymer that contains functional groups capable of undergoing further polymerizing/crosslinking reactions. Medium and high molecular weight typically means average molecular weights greater than 700 Daltons. Preferably, a macromer contains ethylenically unsaturated groups and can be polymerized actinically or thermally.

"Molecular weight" of a polymeric material (including monomeric or macromeric materials), as used herein, refers to the number-average molecular weight unless otherwise specifically noted or unless testing conditions indicate otherwise.

A "polymer" means a material formed by polymerizing/crosslinking one or more monomers, macromers and/or oligomers.

A "photoinitiator" refers to a chemical that initiates radical crosslinking and/or polymerizing reaction by the use of light. Suitable photoinitiators include, without limitation, benzoin methyl ether, diethoxyacetophenone, a benzoylphosphine oxide, 1-hydroxycyclohexyl phenyl ketone, Darocure® types, and Irgacure® types, preferably Darocur® 1173, and Irgacure® 2959.

A "thermal initiator" refers to a chemical that initiates radical crosslinking/polymerizing reaction by the use of heat energy. Examples of suitable thermal initiators include, but are not limited to, 2,2'-azobis (2,4-dimethylpentanenitrile), 2,2'-azobis (2-methylpropanenitrile), 2,2'-azobis (2-methylbutanenitrile), peroxides such as benzoyl peroxide, and the like. Preferably, the thermal initiator is azobisisobutyronitrile (AIBN).

"Visibility tinting" in reference to a lens means dying (or coloring) of a lens to enable the user to easily locate a lens in a clear solution within a lens storage, disinfecting or cleaning container. It is well known in the art that a dye and/or a pigment can be used in visibility tinting a lens.

"Dye" means a substance that is soluble in a solvent and that is used to impart color. Dyes are typically translucent and absorb but do not scatter light. Any suitable biocompatible dye can be used in the present invention.

A "Pigment" means a powdered substance that is suspended in a liquid in which it is insoluble. A pigment can be a fluorescent pigment, phosphorescent pigment, pearlescent pigment, or conventional pigment. While any suitable pigment may be employed, it is presently preferred that the pigment be heat resistant, non-toxic and insoluble in aqueous solutions.

The term "fluid" as used herein indicates that a material is capable of flowing like a liquid.

"Surface modification", as used herein, means that an article has been treated in a surface treatment process (or a surface modification process), in which, by means of contact with a vapor or liquid, and/or by means of application of an energy source (1) a coating is applied to the surface of an article, (2) chemical species are adsorbed onto the surface of an article, (3) the chemical nature (e.g., electrostatic charge) of chemical groups on the surface of an article are altered, or (4) the surface properties of an article are otherwise modified. Exemplary surface treatment processes include, but are not limited to, a surface treatment by energy (e.g., a plasma, a static electrical charge, irradiation, or other energy source), chemical treatments, the grafting of hydrophilic monomers or macromers onto the surface of an article, and layer-by-layer (LbL) deposition of polyelectrolytes. A preferred class of surface treatment processes are plasma processes, in which an ionized gas is applied to the surface of an article, and LbL coating processes.

Plasma gases and processing conditions are described more fully in U.S. Pat. Nos. 4,312,575 and 4,632,844 and published U.S. Patent Application No. 2002/0025389. The plasma gas is preferably a mixture of lower alkanes and nitrogen, oxygen or an inert gas.

"LbL coating", as used herein, refers to a coating that is not covalently attached to an article, preferably a medical device, and is obtained through a layer-by-layer ("LbL") deposition of polyionic (or charged) and/or non-charged materials on an article. An LbL coating can be composed of one or more layers, preferably one or more bilayers.

The term "bilayer" is employed herein in a broad sense and is intended to encompass: a coating structure formed on a medical device by alternatively applying, in no particular order, one layer of a first polyionic material (or charged material) and subsequently one layer of a second polyionic material (or charged material) having charges opposite of the charges of the first polyionic material (or the charged material); or a coating structure formed on a medical device by alternatively applying, in no particular order, one layer of a first charged polymeric material and one layer of a non-charged polymeric material or a second charged polymeric material. It should be understood that the layers of the first and second coating materials (described above) may be intertwined with each other in the bilayer.

Formation of an LbL coating on an ophthalmic device may be accomplished in a number of ways, for example, as described in US Patent Ser. No. 6,451,871 and pending U.S. patent applications (Appl. Nos. 09/774942, 09/775104, 10/654,566). One coating process embodiment involves solely dip-coating and dip-rinsing steps. Another coating process embodiment involves solely spray-coating and spray-rinsing steps. However, a number of alternatives involve various combinations of spray- and dip-coating and rinsing steps may be designed by a person having ordinary skill in the art.

An "antimicrobial agent", as used herein, refers to a chemical that is capable of decreasing or eliminating or inhibiting the growth of microorganisms such as that term is known in the art.

"Antimicrobial metals" are metals whose ions have an antimicrobial effect and which are biocompatible. Preferred antimicrobial metals include Ag, Au, Pt, Pd, Ir, Sn, Cu, Sb, Bi and Zn, with Ag being most preferred.

"Antimicrobial metal-containing nanoparticles" refer to particles having a size of less than 1 micrometer and containing at least one antimicrobial metal present in one or more of its oxidation states.

"Antimicrobial metal nanoparticles" refer to particles which is made essentially of an antimicrobial metal and have a size of less than 1 micrometer. The antimicrobial metal in the antimicrobial metal nanoparticles can be present in one or more of its oxidation states. For example, silver-containing nanoparticles can contain silver in one or more of its oxidation states, such as $Ag^0$, $Ag^{1+}$, and $Ag^{2+}$.

"Stabilized antimicrobial metal nanoparticles" refer to antimicrobial metal nanoparticles which are stabilized by a stabilizer during their preparation. Stabilized antimicrobial metal nano-particles can be either positively charged or negatively charged or neutral, largely depending on a material (or so-called stabilizer) which is present in a solution for preparing the nano-particles and can stabilize the resultant nano-particles. A stabilizer can be any known suitable material. Exemplary stabilizers include, without limitation, positively charged polyionic materials, negatively charged polyionic materials, polymers, surfactants, salicylic acid, alcohols and the like.

The "oxygen transmissibility" of a lens, as used herein, is the rate at which oxygen will pass through a specific ophthalmic lens. Oxygen transmissibility, Dk/t, is conventionally expressed in units of barrers/mm, where t is the average thickness of the material [in units of mm] over the area being measured and "barrer/mm" is defined as:

$$[(cm^3 \text{ oxygen}) / (cm^2)(sec)(mm^2 \text{ Hg})] \times 10^{-9}$$

The intrinsic "oxygen permeability", Dk, of a lens material does not depend on lens thickness. Intrinsic oxygen permeability is the rate at which oxygen will pass through a material. Oxygen permeability is conventionally expressed in units of barrers, where "barrer" is defined as:

$$[(cm^3 \text{ oxygen})(mm) / (cm^2)(sec)(mm^2 \text{ Hg})] \times 10^{-10}$$

These are the units commonly used in the art. Thus, in order to be consistent with the use in the art, the unit "barrer" will have the meanings as defined above. For example, a lens having a Dk of 90 barrers ("oxygen permeability barrers") and a thickness of 90 microns (0.090 mm) would have a Dk/t of 100 barrers/mm (oxygen transmissibility barrers/mm). In accordance with the invention, a high oxygen permeability in reference to a material or a contact lens characterized by apparent oxygen permeability of at least 40 barrers or larger measured with a sample (film or lens) of 100 microns in thickness according to a coulometric method described in Examples.

The "ion permeability" through a lens correlates with both the Ionoflux Diffusion Coefficient and the Ionoton Ion Permeability Coefficient.

The Ionoflux Diffusion Coefficient, D, is determined by applying Fick's law as follows:

$$D = - n' / (A \times dc/dx)$$

where

n' = rate of ion transport [mol/min]
A = area of lens exposed [mm$^2$]
D = Ionoflux Diffusion Coefficient [mm$^2$/min]
dc = concentration difference [mol/L]
dx = thickness of lens [mm]

The Ionoton Ion Permeability Coefficient, P, is then determined in accordance with the following equation:

$$\ln( 1 - 2C(t)/C(0) ) = -2APt / Vd$$

where:

C(t) = concentration of sodium ions at time t in the receiving cell
C(0) = initial concentration of sodium ions in donor cell
A = membrane area, i.e., lens area exposed to cells
V = volume of cell compartment (3.0 ml)
d = average lens thickness in the area exposed
P = permeability coefficient

An Ionoflux Diffusion Coefficient, D, of greater than about 1.5 x 10$^{-6}$ mm$^2$/min is preferred, while greater than about 2.6 x 10$^{-6}$ mm$^2$/min is more preferred and greater than about 6.4 x 10$^{-6}$ mm$^2$/min is most preferred.

An Ionoton Ion permeability Coefficient, P, of greater than about 0.2x 10$^{-6}$ cm$^2$/second is preferred, while greater than about 0.3 x 10$^{-6}$ cm$^2$/second is more preferred and greater than about 0.4 x 10$^{-6}$ cm$^2$/second is most preferred.

It is known that on-eye movement of the lens is required to ensure good tear exchange, and ultimately, to ensure good corneal health. Ion permeability is one of the predictors of on-eye movement, because the permeability of ions is believed to be directly proportional to the permeability of water.

The term "oxyperm component in a polymerizable composition" as used herein, refers to monomers, oligomers, macromers, and the like, and mixtures thereof, which are capable of polymerizing with like or unlike polymerizable materials to form a polymer which displays a relatively high rate of oxygen diffusion therethrough.

Room temperature (or ambient temperature) is defined as 22±6 °C.

The term "lathability" in reference to a material is referred to its capability to be machined into a contact lens with optical quality using typical lens lathing equipments. One gauge of lathability of a material is its predominant glass transition temperature ($T_g$). Single phase polymeric materials with one $T_g$ below room temperature (i.e., lathing temperature) are considered to be too soft for room temperature lathing whereas those with $T_g$ above room temperature (i.e.,

lathing temperature), preferably at least 3 degrees above room temperature, have sufficient hardness for lathing at room temperature. Microscopically multiphasic polymeric materials may display one predominant (apparently single) $T_g$ or more than one $T_g$. As long as a microscopically multiphasic polymeric material has a $T_g$ (predominant glass transition temperature) associated with the dominant phase of the material being at room temperature or above, it can be lathed into contact lenses at room temperature. "Dominant phase" is defined herein as a phase in a multiphasic material that determines the overall (bulk or working) hardness of a material.

The term "rod" refers to a cylinder cast-molded from a lens-forming material in a tube, wherein the cylinder has a length of about 1 cm or longer.

The term "button" refers to a short cylinder (with length of about 1 cm or less) cast-molded from a lens-forming material in a mold. In accordance with the present invention, both the opposite surfaces of a button can flat and curved. For example, one of the two opposite surfaces of a button can be a concave curved (e.g., hemispherical) surface whereas the other surface is a convex curved (e.g., hemispherical) surface).

The term "bonnet" refers to a polymeric button cast-molded from a lens-forming material in a mold, wherein at least one of the two opposite surfaces of the bonnet has an optically finished surface corresponding to one of the anterior and posterior surfaces of a contact lens. The term "optically finished" in reference to a surface or a zone in a surface refers to a surface of a contact lens or a zone in a surface of a contact lens, wherein the surface or zone does not need to undergo further processing, e.g., such as, polishing or lathing. One could also machine lenses from pseudo bonnets. A pseudo bonnet is a part that would require lathing of both sides of the material in order to obtain a contact lens. This type of part would allow for flexibility in the design of the front an back surfaces of a lens while minimizing material losses.

The present invention is generally directed to silicone hydrogel materials which have a high oxygen permeability (40 Barrers or higher when testing a sample with a thickness of about 100 microns for apparent (directly measured) oxygen permeability according to procedures described in Examples) and one or more of other desirable lens properties, such as, a desired water content when fully hydrated, ion permeability, mechanics properties, as well as a good lathability at room temperature.

The present invention, in one aspect, provides a silicone hydrogel material which: (1) is characterized by having an oxygen permeability of at least 45 barrers, an ion permeability characterized either by an Ionoton Ion Permeability Coefficient of greater than about $0.2 \times 10^{-6}$ cm$^2$/sec or by an Ionoflux Diffusion Coefficient of greater than about $1.5 \times 10^{-6}$ cm$^2$/min, and a predominant glass transition temperature of $22 \pm 6$ °C or higher; and (2) is a copolymerization product of a solvent-free polymerizable composition comprising (a) at least one silicone-containing vinylic monomer or macromer or mixture thereof, (b) at least one hydrophilic vinylic monomer, and (c) at least one blending vinylic monomer in an amount of from about 5% to about 30% by weight, wherein the blending vinylic monomer is an aromatic vinylic monomer, a cycloalkyl-containing vinylic monomer, a Tg-enhancing vinylic monomer, or a mixture thereof, wherein the Tg-enhancing vinylic monomer is selected from the group consisting of acrylic acid, $C_1$-$C_{10}$ alkyl methacrylate, methacrylonitrile, acrylonitrile, $C_1$-$C_{10}$ alkyl acrylate, N-isopropyl acrylamide, 2-vinylpyridine, and 4-vinylpyridine, and wherein the silicone hydrogel material has a water content of from about 18% to about 55% by weight when fully hydrated. Preferably in (c) the amount is sufficient to dissolve both hydrophilic and hydrophobic components of the polymerizable composition.

In accordance with the present invention, any know suitable silicone-containing macromer can be used to prepare soft contact lenses. A particularly preferred silicone-containing macromer is selected from the group consisting of Macromer A, Macromer B, Macromer C, and Macromer D described in US 5,760,100. Macromers that contain two or more polymerizable groups (vinylic groups) can also serve as cross linkers. Di and triblock macromers consisting of polydimethylsiloxane and polyakyleneoxides could also be of utility. Such macromers could be mono or difunctionalized with acrylate, methacrylate or vinyl groups. For example one might use methacrylate end capped polyethyleneoxide-block-polydimethylsiloxane-block-polyethyleneoxide to enhance oxygen permeability. Any known suitable silicone-containing vinylic monomers can be used to prepare soft contact lenses.

Examples of silicone-containing monomers include, without limitation, methacryloxyalkylsiloxanes, 3-methacryloxy propylpentamethyldisiloxane, bis(methacryloxypropyl)tetramethyl-disiloxane, monomethacrylated polydimethylsiloxane, vinyl terminated polydimethylsiloxane, vinyl terminated polydimethylsiloxane-block-polyethyleneoxide, vinyl terminated polydimethylsiloxane-block-polypropyleneoxide, methacrylate or acrylate terminated polydimethylsiloxane-block-polyethyleneoxide, methacrylate or acrylate terminated polydimethylsiloxane-block-polypropyleneoxide, monoacrylated polydimethylsiloxane, mercapto-terminated polydimethylsiloxane, N-[tris(trimethylsiloxy)silylpropyl]acrylamide, N-[tris(trimethylsiloxy)silylpropyl]methacrylamide, and tristrimethylsilyloxysilylpropyl methacrylate (TRIS). A preferred silicone-containing vinylic monomer is TRIS, which is referred to 3-methacryloxypropyltris(trimethylsiloxy) silane, and represented by CAS No. 17096-07-0. The term "TRIS" also includes dimers of 3-methacryloxypropyltris-(trimethylsiloxy) silane. Monomethacrylated or monoacrylated polydimethylsiloxanes of various molecular weight could be used. Multi functional monomers and macromers (those containing two or more ethylenically unsaturated units can also serve as cross-linking agents.

Nearly any hydrophilic vinylic monomer can be used in the fluid composition of the invention. Suitable hydrophilic monomers are, without this being an exhaustive list, hydroxyl-substituted lower alkyl ($C_1$ to $C_8$) acrylates and methacr-

ylates, acrylamide, methacrylamide, (lower allyl)acrylamides and -methacrylamides, ethoxylated acrylates and methacrylates, hydroxyl-substituted (lower alkyl)acrylamides and -methacrylamides, hydroxyl-substituted lower alkyl vinyl ethers, sodium vinylsulfonate, sodium styrenesulfonate, 2-acrylamido-2-methylpropanesulfonic acid, N-vinylpyrrole, N-vinyl-2-pyrrolidone, 2-vinyloxazoline, 2-vinyl4,4'-dialkyloxazolin-5-one, 2- and 4-vinylpyridine, vinylically unsaturated carboxylic acids having a total of 3 to 5 carbon atoms, amino(lower alkyl)- (where the term "amino" also includes quaternary ammonium), mono(lower alkylamino)(lower alkyl) and di(lower alkylamino)(lower alkyl)acrylates and methacrylates, allyl alcohol and the like.

Among the preferred hydrophilic vinylic monomers are N,N-dimethylacrylamide (DMA), 2-hydroxyethylmethacrylate (HEMA), 2-hydroxyethyl acrylate (HEA), hydroxypropyl acrylate, hydroxypropyl methacrylate (HPMA), trimethylammonium 2-hydroxy propylmethacrylate hydrochloride, dimethylaminoethyl methacrylate (DMAEMA), glycerol methacrylate (GMA), N-vinyl-2-pyrrolidone (NVP), dimethylaminoethylmethacrylamide, acrylamide, methacrylamide, allyl alcohol, vinylpyridine, N-(1,1dimethyl-3-oxobutyl)acrylamide, acrylic acid, and methacrylic acid.

In accordance with the invention, a "blending vinylic monomer" refers to a vinylic monomer which can function both as a solvent to dissolve both hydrophilic and hydrophobic components of a polymerizable composition of the invention and as one of polymerizable components to be polymerized to form a silicone hydrogel material. The blending vinylic monomer is present in the polymerizable composition in an amount of from about 5% to about 30% by weight.

Any suitable vinylic monomers, capable of dissolving both hydrophilic and hydrophobic components of a polymerizable composition of the invention to form a solution, can be used in the invention. Preferred examples of blending vinylic monomers include, without limitation, aromatic vinylic monomers, cycloalkyl-containing vinylic monomers. Those preferred blending monomers can increase the predominant glass transition temperature of a silicone hydrogel material prepared by curing a polymerizable composition containing those preferred blending monomer.

In accordance with the present invention, the polymerizable composition can further have one or more Tg-enhancing vinylic monomers selected from the group consisting of acrylic acid, $C_1$-$C_4$ alkyl methacrylate (e.g., methylmethacrylate, ethylmethacrylate, propylmethacrylate, isopropylmethacrylate, t-butylmethacrylate), methacrylonitrile, acrylonitrile, $C_1$-$C_4$ alkyl acrylate, N-isopropyl acrylamide, 2-vinylpyridine, and 4-vinylpyridine. It is understood that aromatic monomers and/or cycloalkyl-containing vinylic monomers can be replaced by one or more of the above Tg-enhancing vinylic monomers.

Examples of preferred aromatic vinylic monomers include styrene, 2,4,6-trimethylstyrene (TMS), t-butyl styrene (TBS), 2,3,4,5,6-pentafluorostyrene, benzylmethacrylate, divinylbenzene, and 2-vinylnaphthalene. Of these monomers, a styrene-containing monomer is preferred. A styrene-containing monomer is defined herein to be a monomer that contains a vinyl group bonded directly to a phenyl group in which the phenyl group can be substituted by other than a fused ring, e.g., as above with one to three $C_1$-$C_6$ alkyl groups. Styrene itself [$H_2C=CH-C_6H_5$] is a particularly preferred styrene-containing monomer.

A cycloalkyl-containing vinylic monomer is defined herein to be a vinylic monomer containing a cycloalkyl which can be substituted by up to three $C_1$-$C_6$ alkyl groups. Preferred cycloalkyl-containing vinylic monomers include, without limitation, acrylates and methacrylates each comprising a cyclopentyl or cyclohexyl or cycloheptyl, which can be substituted by up to 3 $C_1$-$C_6$ alkyl groups. Examples of preferred cycloalkyl-containing vinylic monomers include isobornylmethacrylate, isobornylacrylate, cyclohexylmethacrylate, cyclohexylacrylate, and the like.

In a preferred embodiment, a solvent-free polymerizable composition of the invention comprises: about 0 to about 40 weight percent of a silicone-containing macromer with ethylenically unsaturated group(s); about 10 to about 30 weight percent of a siloxane-containing vinylic monomer; about 15 to about 50 weight percent of a hydrophilic vinylic monomer; and about 5 to about 20 weight percent of a blending vinylic monomer.

In accordance with the present invention, one or more of acrylic acid, $C_1$-$C_{10}$ alkyl methacrylate (e.g., methylmethacrylate, ethylmethacrylate, propylmethacrylate, isopropylmethacrylate, t-butylmethacrylate, neopentyl methacrylate, 2-ethylhexyl methacrylate), methacrylonitrile, acrylonitrile, $C_1$-$C_{10}$ alkyl acrylate, N-isopropyl acrylamide, 2-vinylpyridine, and 4-vinylpyridine can be used as blending vinylic monomers. They can also be used together with an aromatic vinylic monomer or a cycloalkyl-containing vinylic monomer. Each of these blending vinylic monomer is capable of forming a homopolymer with a glass transition temperature of above 60 °C. As such, by using one or more of these blending monomers can increase the predominant glass transition temperature of a silicone hydrogel material prepared by curing a polymerizable composition containing those preferred blending monomers.

In accordance with the present invention, a polymerizable fluid composition can further comprise various components, such as cross-linking agents, hydrophobic vinylic monomers, initiator, UV-absorbers, inhibitors, fillers, visibility tinting agents, antimicrobial agents, and the like.

Cross-linking agents may be used to improve structural integrity and mechanical strength. Examples of cross-linking agents include without limitation allyl(meth)acrylate, lower alkylene glycol di(meth)acrylate, poly lower alkylene glycol di(meth)acrylate, lower alkylene di(meth)acrylate, divinyl ether, divinyl sulfone, di- or trivinylbenzene, trimethylolpropane tri(meth)acrylate, pentaerythritol tetra(meth)acrylate, bisphenol A di(meth)acrylate, methylenebis(meth)acrylamide, triallyl phthalate or diallyl phthalate. A preferred cross-linking agent is ethylene glycol dimethacrylate (EGDMA).

The amount of a cross-linking agent used is expressed in the weight content with respect to the total polymer and is in the range from 0.05 to 20 %, in particular in the range from 0.1 to 10 %, and preferably in the range from 0.1 to 2 %. If the cross linking agent is a polydimethylsiloxane, or block copolymer of polydimethylsiloxane, the weight percentage in the formulation might be in the range of 30-50% since such a material will be present to enhance oxygen permeability. Macromers described in this application that contain two or more polymerizable groups can serve as cross-linking agents and oxygen permeability enhancers. The amount of di-functional silicone containing macromers in weight content with respect to total polymer is in the range of about 10 to about 50 percent.

Initiators, for example, selected from materials well known for such use in the polymerization art, may be included in the lens-forming fluid material in order to promote, and/or increase the rate of, the polymerization reaction.

Suitable photoinitiators are benzoin methyl ether, diethoxyacetophenone, a benzoylphosphine oxide, 1-hydroxycyclohexyl phenyl ketone and Darocur and Irgacur types, preferably Darocur 1173® and Darocur 2959®. Examples of benzoylphosphine initiators include 2,4,6-trimethylbenzoyldiphenylophosphine oxide; bis-(2,6-dichlorobenzoyl)-4-N-propylphenylphosphine oxide; and bis-(2,6-dichlorobenzoyl)-4-N-butylphenylphosphine oxide. Reactive photoinitiators which can be incorporated, for example, into a macromer or can be used as a special monomer are also suitable. Examples of reactive photoinitiators are those disclosed in EP 632 329. The polymerization can then be triggered off by actinic radiation, for example light, in particular UV light of a suitable wavelength. The spectral requirements can be controlled accordingly, if appropriate, by addition of suitable photosensitizers.

Examples of suitable thermal initiators include, but are not limited to, 2,2'-azobis (2,4-dimethylpentanenitrile), 2,2'-azobis (2-methylpropanenitrile), 2,2'-azobis (2-methylbutanenitrile), azobisisobutyronitrile (AIBN), peroxides such as benzoyl peroxide, and the like. Preferably, the thermal initiator is 2,2'-azo-bis(2,4-dimethylvaleronitrile) (VAZO-52).

By removing solvent from a polymerizable composition, an obtained silicone hydrogel material may not necessary to be subjected to a process in which a solvent is removed from the silicone hydrogel material so as to reduce its stickiness and/or softness and as such, the silicone hydrogel material can be directly lathed at room temperature to make contact lenses. In addition, it is discovered that by using a solvent-free polymerizable composition, one can obtain a silicone hydrogel material having relatively low level of extractable chemicals (i.e., so called extractables). Therefore, a costly extraction process may not be needed in the production of contact lenses with a silicone hydrogel material prepared from a solvent-free polymerizable composition.

In a preferred embodiment, a polymerizable composition of the invention comprises: about 0 to about 40 weight percent of a silicone-containing macromer with ethylenically unsaturated group(s); about 10 to about 30 weight percent of a siloxane-containing vinylic monomer; about 15 to about 50 weight percent of a hydrophilic vinylic monomer; and about 5 to about 20 weight percent of an aromatic vinylic monomer, a cycloalkylmethacrylate or a cycloalkylacrylate.

Any silicone-containing vinylic monomers, silicone-containing polymerizable macromers, hydrophilic vinylic monomers, aromatic vinylic monomers, cycloalkyl-containing vinylic monomers, cross-linking agents, hydrophobic vinylic monomers, initiator, UV-absorbers, inhibitors, fillers, visibility tinting agents, antimicrobial agents described above can be used in this aspect of the invention.

A silicone hydrogel material of the invention has an oxygen permeability of preferably at least about 55 barrers, more preferably at least about 70 barrers, even more preferably at least about 80 barrers. In accordance with the invention, an oxygen permeability is an apparent (directly measured when testing a sample with a thickness of about 100 microns) oxygen permeability according to procedures described in Examples.

In accordance with the invention, an Ionoflux Diffusion Coefficient, D, of greater than about $1.5 \times 10^{-6}$ mm$^2$/min is preferred, while greater than about $2.6 \times 10^{-6}$ mm$^2$/min is more preferred and greater than about $6.4 \times 10^{-6}$ mm$^2$/min is most preferred.

In accordance with the invention, an Ionoton Ion permeability Coefficient, P, of greater than about $0.2 \times 10^{-6}$ cm$^2$/second is preferred, while greater than about $0.3 \times 10^{-6}$ cm$^2$/second is more preferred and greater than about $0.4 \times 10^{-6}$ cm$^2$/second is most preferred.

A silicone hydrogel material of the invention has a water content of from about 18% to about 55% when fully hydrated. The water content of a silicone hydrogel material or a lens can be measured according to Bulk Technique as disclosed in US 5,849,811. Preferably, the silicone hydrogel material has a water content of about 23 to 38 weight percent, based on the total lens weight.

A silicone hydrogel material of the invention can find use in production of ophthalmic devices, preferably contact lenses, more preferably MTO or customized contact lenses. The present invention, in still another aspect, provides a contact lens comprising a silicone hydrogel material as described above.

A contact lens of the invention has an oxygen permeability of preferably at least about 55 barrers, more preferably at least about 70 barrers, even more preferably at least about 80 barrers. In accordance with the invention, an oxygen permeability is an apparent (directly measured when testing a sample with a thickness of about 100 microns) oxygen permeability according to procedures described in Examples.

In accordance with the invention, an Ionoflux Diffusion Coefficient, D, of greater than about $1.5 \times 10^{-6}$ mm$^2$/min of a contact lens is preferred, while greater than about $2.6 \times 10^{-6}$ mm$^2$/min is more preferred and greater than about 6.4

x $10^{-6}$ mm$^2$/min is most preferred.

In accordance with the invention, an Ionoton Ion permeability Coefficient, P, of greater than about 0.2x $10^{-6}$ cm$^2$/second of a contact lens is preferred, while greater than about 0.3 x $10^{-6}$ cm$^2$/second is more preferred and greater than about 0.4 x $10^{-6}$ cm$^2$/second is most preferred.

A contact lens of the invention preferably has a water content of from about 18% to about 55% when fully hydrated. The water content of a silicone hydrogel material or a lens can be measured according to Bulk Technique as disclosed in US 5,849,811. More preferably, the silicone hydrogel material has a water content of about 23 to 38 weight percent, based on the total lens weight.

On-eye movement of a lens may be also predicted from the mechanical properties of a lens, the ion or water permeability through the lens, or both the mechanical properties and ion or water permeability. In fact, on-eye movement may be predicted more accurately from a combination of mechanical properties and ion or water permeability.

It has been determined that the tensile modulus (modulus of elasticity, E) correlate well with on-eye movement. In order to have appropriate on-eye movement, a lens has a tensile modulus of preferably less than about 3.0 MPa, <u>preferably from about 0.5 to about 2.5 MPa,</u> more preferably less than about 2.0 MPa, even more preferably from about 0.5 to about 1.5 MPa.

A contact lens of the invention can be made according to any known suitable methods, such as, double-sided molding processes, cast-molding processes, lathing, and combinations thereof.

Where a contact lens of the invention is a contact lens, in particular a MTO or customized contact lens, one can lathe directly at room temperature a rod, preferably a button, more preferably a bonnet of a silicone hydrogel material into the ophthalmic device. Any known suitable lathe apparatus can be used in this invention. Preferably, a computer controllable (or numerically controlled) lathe is used in the invention. More preferably, a numerically controlled two-axis lathe with a 45° piezo cutter or a lathe apparatus disclosed by Durazo and Morgan in US patent No. 6,122,999 is used in the invention. Exemplary preferred lathe apparatus include without limitation numerically controlled lathes from Precitech, Inc., for example, such as Optoform ultra-precision lathes (models 30, 40, 50 and 80) having Variform piezo-ceramic fast tool servo attachment. A person skilled in the art will know how to prepare rods, buttons, and bonnets. For example, a rod can be produced by thermally or actinically curing a polymerizable composition of the invention in a tube made of plastic or glass or quartz. The resultant rod optionally can be subjected to a post-curing treatment. The diameter of a tube used in the preparation is larger than the diameter of a contact lens to be made. A rod can be further cut into buttons prior to lathing.

A person skilled in the art knows how to make molds for cast-molding or spin-casting polymer buttons. Preferably, a mold can be used to cast mold buttons, the two opposite surfaces of each of which are curved. For example, one of the two opposite surfaces of a button can be a concave curved (e.g., hemispherical) surface whereas the other surface is a convex curved (e.g., hemispherical) surface. Advantage of cast-molding buttons with two opposite curved surfaces is that less silicone hydrogel material is cut away and therefore wasted. The two curved surfaces of a button can have identical or different curvatures. Preferably, the two curved surfaces are spherical.

In the fabrication of buttons by spin casting, the lens-forming material is placed in the mold cavity having an optical concave surface wetted by said material, and then intermittently and forced fed, one at a time, into the inlet end of a rotating polymerization column which desirably comprises a "conditioning" zone near the inlet end and a polymerization reaction zone toward the outlet end. It is preferred that the molds be characterized by a pretreated optical surface to increase its hydrophylicity or wettability in a manner well-know in the art. The speed of rotation of the tube and the molds, when secured in interference fitting relationship, is adjusted to cause and/or maintain radially outward displacement of the lens-forming material to a predetermined lens configuration which when subjected to the polymerization conditions employed in the tube will form the desired shaped contact lens. Rotational speed of, for example, 300 r.p.m., and lower to 600 r.p.m., and higher, can be conveniently used. The precise rotational speed to employ in the operation is, of course, well within the skill of the artisan. Factors to be considered include the type and concentration of the components comprising the lens-forming material employed, the operative conditions of choice, the type and concentration of initiator, and/or the intensity and type of energy source to initiate polymerization, and factors discussed previously and readily apparent to the artisan.

A person skilled in the art knows well that the polymerization column (tube), as typically used in spin casting, has to be fabricated from a material that will not impede the transmission of the actinic radiation into the polymerization zone of the column. Glass, such as PYREX, would be a suitable material for the polymerization column when using long wavelength U.V. light as actinic radiation. When using other types of actinic radiation as recited above, the polymerization column could be fabricated from various types of metals such as steel, nickel, bronze, various alloys, and the like.

A person skilled in the art knows how to make molds for cast-molding polymer bonnets each having an optically finished surface corresponding to one of the anterior and posterior surfaces of the contact lens. Preferably, a mold comprising a mold half having a molding surface with optical quality is used to produce bonnets. The molding surface of the mold half defines one of the posterior and anterior surface of a silicone hydrogel contact lens. Only one side (the anterior surface or posterior surface) of lens and lens edge need to be lathed directly from a bonnet. It is understood that the surface opposite of the optically finished surface of the bonnet can be flat or curved, preferably is a convex hemispherical surface.

The above described spin-casting can also be used to produce a bonnet having an optically finished surface corresponding to the anterior surface of a contact lens.

Where a contact lens (e.g., toric or translating multifocal lens) requires orientation and/or translation features, it would be advantageous that the entire posterior surface and a target geometry, common to all contact lenses and outside of the optical zone, of the anterior surface of a contact lens can be formed by curing a polymerizable composition in a mold for making a bonnet while lathing of a bonnet could be reduced to the finish cuts defining any desired optical zone geometry of the anterior surface of a contact lens while directly molding. As such, time, cost and material waste associated with the production of customized or made-to-order (MTO) contact lenses can be minimized. Customized or made-to-order (MTO) contact lenses can be made to match exactly to any patient's prescription. A mold for making such bonnets includes a first mold half having a first molding surface with optical quality and a second mold half having a second molding surface, wherein the second molding surface has a substantially-annular peripheral molding zone with optical quality, wherein the first molding surface defines the posterior surface of the contact lens, wherein the peripheral molding zone defines the one or more non-optical zones on the anterior surface of the contact lens. A bonnet prepared from such a mold has one optically finished surface corresponding to the posterior surface of the contact lens and one surface having an optically finished zone corresponding to the one or more substantially annular non-optical zones surrounding the central optical zone of the contact lens. One only needs to lathe surface areas, surrounded by the optically-finished zone on the side opposite to the optically-finished surface, of the bonnet, thereby obtaining the contact lens.

In a preferred embodiment, a contact lens of the invention has a hydrophilic surface obtained by using a surface modification process. The hydrophilic surface refers to a surface having an averaged contact angle of 85 degrees or less, more preferably 65 degrees or less when the ophthalmic device is fully hydrated. Preferably, the hydrophilic surface is a plasma coating or an LbL coating.

An "average contact angle" refers to a contact angle of water on a surface of a material (measured by Sessile Drop method), which is obtained by averaging measurements of at least 3 individual samples (e.g., contact lenses). Average contact angles (Sessile Drop) of contact lenses can be measured using a VCA 2500 XE contact angle measurement device from AST, Inc., located in Boston, Massachusetts. This equipment is capable of measuring advancing or receding contact angles or sessile (static) contact angles. The measurements are preferably performed on fully hydrated materials.

Contact angle is a general measure of the surface hydrophilicity of a contact lens or an article (e.g., the cavity surface of a container). In particular, a low contact angle corresponds to more hydrophilic surface.

The previous disclosure will enable one having ordinary skill in the art to practice the invention. In order to better enable the reader to understand specific embodiments and the advantages thereof, reference to the following examples is suggested.

Example 1

Unless otherwise stated, all chemicals are used as received. Differential scan calorimetric (DSC) experiments are carried out in aluminum pans in a nitrogen atmosphere using a TA Instruments 2910 DSC. The instrument is calibrated with indium. Glass tubes used for making rods of silicone hydrogel materials are silanized prior to use. Lenses are extracted with isopropanol (isopropyl alcohol) for at least 4 hours and subjected plasma treatment according to procedures described in published US patent application No. 2002/0025389 to obtain plasma coatings. Oxygen and ion permeability measurements are carried out with lenses after extraction and plasma coating. Non-plasma coated lenses are used for tensile testing and water content measurements.

*Oxygen permeability measurements.* The oxygen permeability of a lens and oxygen transmissibility of a lens material is determined according to a technique similar to the one described in U.S. Patent No. 5,760,100 and in an article by Winterton et al., (The Cornea: Transactions of the World Congress on the Cornea 111, H.D. Cavanagh Ed., Raven Press: New York 1988, pp 273-280). Oxygen fluxes (J) are measured at 34 °C in a wet cell (i.e., gas streams are maintained at about 100% relative humidity) using a Dk1000 instrument (available from Applied Design and Development Co., Norcross, GA), or similar analytical instrument. An air stream, having a known percentage of oxygen (e.g., 21 %), is passed across one side of the lens at a rate of about 10 to 20 $cm^3$ /min., while a nitrogen stream is passed on the opposite side of the lens at a rate of about 10 to 20 $cm^3$ /min. A sample is equilibrated in a test media (i.e., saline or distilled water) at the prescribed test temperature for at least 30 minutes prior to measurement but not more than 45 minutes. Any test media used as the overlayer is equilibrated at the prescribed test temperature for at least 30 minutes prior to measurement but not more than 45 minutes. The stir motor's speed is set to $1200\pm50$ rpm, corresponding to an indicated setting of $400\pm15$ on the stepper motor controller. The barometric pressure surrounding the system, $P_{measured}$, is measured. The thickness (t) of the lens in the area being exposed for testing is determined by measuring about 10 locations with a Mitotoya micrometer VL-50, or similar instrument, and averaging the measurements. The oxygen concentration in the nitrogen stream (i.e., oxygen which diffuses through the lens) is measured using the DK1000 instrument. The apparent oxygen permeability of the lens material, $Dk_{app}$, is determined from the following formula:

$$Dk_{app} = Jt/(P_{oxygen})$$

where J=oxygen flux [microliters $O_2$ /$cm^2$ -minute]

$$P_{oxygen} = (P_{measured} - P_{water}\ vapor) = (\%O_2\ in\ air\ stream)\ [mm\ Hg] = partial\ pressure\ of$$

oxygen in the air stream

$P_{measured}$ =barometric pressure (mm Hg)

$P_{water}$ vapor =0 mm Hg at 34°C (in a dry cell) (mm Hg)

$P_{water}$ vapor =40 mm Hg at 34°C (in a wet cell) (mm Hg)

t=average thickness of the lens over the exposed test area (mm)

where $Dk_{app}$ is expressed in units of barrers.

The oxygen transmissibility (Dk /t) of the material may be calculated by dividing the oxygen permeability ($Dk_{app}$) by the average thickness (t) of the lens.

*Ion Permeability Measurements.* The ion permeability of a lens is measured according to procedures described in U.S. Patent No. 5,760,100. The values of ion permeability reported in the following examples are relative ionoflux diffusion coefficients ($D/D_{ref}$) in reference to a lens material, Alsacon, as reference material. Alsacon has an ionoflux diffusion coefficient of $0.314 \times 10^{-3}$ $mm^2$/minute.

Example 2 (Synthesis of Silicone-containing Macromer)

51.5g (50 mmol) of the perfluoropolyether Fomblin® ZDOL (from Ausimont S.p.A, Milan) having a mean molecular weight of 1030 g/mol and containing 1.96meq/g of hydroxyl groups according to end-group titration is introduced into a three-neck flask together with 50mg of dibutyltin dilaurate. The flask contents are evacuated to about 20 mbar with stirring and subsequently decompressed with argon. This operation is repeated twice. 22.2g (0.1 mol) of freshly distilled isophorone diisocyanate kept under argon are subsequently added in a counterstream of argon. The temperature in the flask is kept below 30°C by cooling with a waterbath. After stirring overnight at room temperature, the reaction is complete. Isocyanate titration gives an NCO content of 1.40 meq/g (theory: 1.35 meq/g).

202g of the $\alpha,\omega$-hydroxypropyl-terminated polydimethylsiloxane KF-6001 from Shin-Etsu having a mean molecular weight of 2000g/mol (1.00meq/g of hydroxyl groups according to titration) are introduced into a flask. The flask contents are evacuated to approx. 0.1 mbar and decompressed with argon. This operation is repeated twice. The degassed siloxane is dissolved in 202ml of freshly distilled toluene kept under argon, and 100mg of dibutyltin dilaurate (DBTDL) are added. After complete homogenization of the solution, all the perfluoropolyether reacted with isophorone diisocyanate (IPDI) is added under argon. After stirring overnight at room temperature, the reaction is complete. The solvent is stripped off under a high vacuum at room temperature. Microtitration shows 0.36meq/g of hydroxyl groups (theory 0.37meq/g).

13.78g (88.9mmol) of 2-isocyanatoethyl methacrylate (IEM) are added under argon to 247g of the $\alpha,\sigma$-hydroxypropyl-terminated polysiloxane-perfluoropolyether-polysiloxane three-block copolymer (a three-block copolymer on stoichiometric average, but other block lengths are also present). The mixture is stirred at room temperature for three days. Microtitration then no longer shows any isocyanate groups (detection limit 0.01 meq/g). 0.34meq/g of methacryl groups are found (theory 0.34meq/g).

The macromer prepared in this way is completely colourless and clear. It can be stored in air at room temperature for several months in the absence of light without any change in molecular weight.

Control Formulations

The above prepared siloxane-containing macromer is used in preparation of two formulations used in the control experiments. Each components and its concentration (percentage by weight) are listed in the Table 1.

Table 1

| Formulation | Macromer | TRIS | DMA | Darocure® 1173 | Ethanol |
|---|---|---|---|---|---|
| I | 37.4 | 15.0 | 22.5 | 0.3 | 24.8 |
| II* | 25.9 | 19.2 | 28.9 | 1 | 25 |
| * Formulation II contains about 50 ppm of copper phthalocyanin. | | | | | |

Example 3

DMA, macromer prepared in Example 2, TRIS, a styrenic monomer (e.g., styrene or t-butyl styrene) and VAZO-52 are mixed to prepare solvent free formulations shown in Table 2 for making room temperature lathable silicone hydrogel materials. Styrene or t-butyl styrene is added in a formulation to ensure miscibility of all components in the absence of solvent (e.g., ethanol) and to enhance lathing characteristics (raise $T_g$) of the polymer.

Table 2

| Component | Formulation (% by weight) | | |
|---|---|---|---|
| | 1563-61-1 | 1563-91-1 | 1563-91-2 |
| DMA | 30.04 | 33.78 | 33.78 |
| Macromer* | 36.05 | 37.98 | 37.98 |
| TRIS | 21.62 | 17.99 | 17.99 |
| Styrene | 12.04 | 9.99 | 0.00 |
| t-butyl styrene | 0.00 | 0.00 | 9.99 |
| VAZO-52 | 0.24 | 0.25 | 0.25 |
| Daracure 1173 | 0.00 | 0.00 | 0.00 |
| Irgacure 2959 | 0.00 | 0.00 | 0.00 |
| * Prepared in Example 2. | | | |

Example 4 (Preparation of Rods of Lathable Silicone Hydrogels)

A formulation prepared in Example 3 is sparged with nitrogen and then poured into silanized glass test tubes (about 75 ml of the formulation). Each tube is capped with rubber septa and then underwent degassing cycles as follows. Vacuum is applied to each tube filled with the formulation for several minutes and then pressure is equalized with nitrogen. Such degassing pressure equalization operation is repeated three times.

The formulation 1563-61-1 is thermally cured and post cured according to the following schedule: (a) at 30°C for 42 hours in an oil bath; (b) at 50°C for 13 hours in a force air oven; (c) at 75°C for 20 hours in a force air oven; and (d) at 105°C for 8 hours in a force air oven. 60 minute ramp rates are used in the cure oven to reach each cure temperature. Samples are allowed to slowly cool to room temperature.

The formulation 1563-91-1 or 1563-91-2 is thermally cured and post cured according to the following schedule: (a) at 30°C for 48 hours in an oil bath; (b) at 40°C for 18 hours in an oil bath; (c) at 50°C for 12 hours in a force air oven; (d) at 75 °C for 12 hours in a force air oven; and (e) at 105°C for 30 hours in a force air oven. 60 minute ramp rates are used in the cure oven to reach each cure temperature. A 4 hour cool down ramp is used to cool samples from 105°C to 30 °C at the end of curing.

Polymer cut from cured rod is tested for glass transition temperature ($T_g$) according to DSC analysis at a scan rate of 20°C/minute. Results are reported in Table 3 of 68 °C. The DSC thermogram for sample 1563-61-1 also shows small endothermic peaks near 9°C and 25 °C. The nature of the endothermic peaks is not known at this time.

Table 3

| | Polymer obtained from Formulation of | | |
|---|---|---|---|
| | 1563-61-1 | 1563-91-1 | 1563-91-2 |
| $T_g$(°C) | 68 | 68 | 60 |

Extraction and Analysis of Polymer Rods

Polymer rods from samples 1563-91-1 and 1563-91-2 are ground on a lathe. Obtained shavings are extracted in isopropanol for 4 and 24 hours. There are no detectable quantities of monomer (DMA, TRIS, styrene or t-butyl styrene) as measured by gas chromatography (GC) after 4 and 24 hours of extraction. The limits of detection are about 100 parts per million (ppm). Extracts are also analyzed by GPC and only a trace quantity of polymeric material with a retention time in the range of silicone-containing macromer (Example 2) is detected in sample 1563-91-1 (24 hour extract). GPC traces from silicone-containing macromer (Example 2) shows a main peak with a shoulder. The shoulder observed in the GPC trace of silicone-containing macromer (Example 2) is not observed in the peak from extract of 1563-91-1. However, the signal in the GPC trace is very weak and poorly defined.

Example 5 (Lens preparation)

*Button Generation Process:* Polymerized Silicone Hydrogel rods, which are prepared according to procedures described in Example 4, are removed from the glass tubes. After separating the polymer rods from the glass tubes, rods are grinded using a center less grinding machine plus it's grinding oil, in order to remove any superficial rod deformity due to its polymerization process and to assure the same rod diameter time after time.
*Button Trimming Process:* Grinded polymer rods are converted into buttons using button trimming lathes. Each Silicone Hydrogel rod is loaded into the button trimming lathe collet mechanism and four (4) forming carbide tools form the button shape while the spindle rotates at 3000 revolutions per minutes. Silicone Hydrogel buttons are then packed into aluminum bags to avoid any pre-hydration. Button trimming process takes place in an environment condition of 20%±5% relative humidity (Rh) at about 72°F.
*Mini File generation:* The geometry to achieve the lens design is described in a file called mini file. The mini file (.MNI) is a geometric description of the profile to be generated that allows complex geometries to be described with comparatively small files and the time to process these files is relatively small when compared with job files (.JFL). Mini files for silicone Hydrogel are created using Mini File Engine software package. The mini files describe any surface in a reasonable number of zones and is unique for each order.
*Lens Lathing:* Once the polymer button and mini files have been generated, OPTOFORM lathes (any one of Optoform 40, Optoform 50, and Optoform 80 with or without the Variform or Varimax third axis attachment) plus their off axis conic generators are used to perform the concave or convex lens lathing. Lathing step take place in an environment of 20%±2%Rh with a temperature of 72±2°F. During lathing natural or synthetic control waviness diamond tools are used. Machining speed of lens lathing goes form 2500-10,000RPM with feed rates that ranges form 10-30 mm/min. During lathing process, a compress air at a dew point of about -60°F is used for blow off debris for a clean cut. Finished parts are inspected for compliance.
Lenses are packaged in a phosphate buffered saline and sterilized (at 123 °C for 20 minutes). Non-plasma coated and sterilized lenses are tested for mechanical properties and water content of lenses. Results are given in table 4. Tensile properties, water content and contact angle measurements are performed on non-plasma coated lenses. For tensile testing, strain rate of 12 mm / min, gauge length of 6.5 mm, strips (2.90 mm width, and 0.096 mm thickness) are used. All samples are submerged in a saline bath during tensile testing. Lenses are autoclaved prior to testing.
The non-plasma coated lenses (1563-61-1) has hydrophobic surfaces as evidenced by an advancing contact angle of 108° (receding contact angle of 56°).
Lenses are extracted with isopropanol for 4 hours, extracted in water for a total of 2 hours, dried, plasma coated and then rehydrated prior to oxygen and ion permeability measurements. Oxygen permeability and ion permeability of plasma coated lenses are determined according to the method disclosed by Nicolson et al. (US5,760,100).
A plurality of lenses are tested and averaged oxygen and ion permeabilities are reported in Table 4.

Table 4

| Properties | Lenses prepared from formulation | | | | |
|---|---|---|---|---|---|
| | 1563-61-1 | 1563-91-1 | 1563-91-2 | I | II |
| Non-plasma-coated lenses | | | | | |
| Water content[1] | 27 % | 32 % | 31 % | 23.3% | |
| Modulus (N/mm$^2$) | 1.04±0.22 | 1.10±0.06 | 1.28±0.28 | 1.40±0.07 | |
| Elongation at Break (%) | 405±61 | 325±92 | 334±51 | 170±46 | |
| Max Elongation (%) | 480 | 440 | 404 | 232 | |
| Break stress (N/mm$^2$) | 5.45±1.53 | 4.16±2.05 | 5.27±1.62 | 1.56±0.46 | |
| Plasma-coated lenses | | | | | |
| Dk (Barrer) | 61.0±2.7 | 73.9±2.8 | 78.4±3.5 | 100 | 70 |
| Ion Permeability | 0.90±0.18 | 3.21±0.12 | 2.94±0.05 | 1-5 | 4-6 |
| 1. Non-plasma coated lenses are used for tensile testing and water content measurements. | | | | | |

The lenses lathed from all samples have ion permeability (IP) and oxygen permeability (Dk) comparable with control lenses (Formulation I or II).

Lenses lathed from all samples show excellent mechanical properties. Young's modulus is lower than that of control (Formulation I). The lenses are extremely strong as evidenced by a break stress value of from about 4.16 to about 5.45 N/mm$^2$ as compared to 1.56 N/mm$^2$ for control (Formulation I). Lenses are also more elastic (elongation at break of from about 325 to about 405 %) as compared to about 170% for control lenses (Formulation I).

The greater mechanical strength and elasticity of the lathed lenses as compared to control lenses (Formulation I) is believed to be largely due to differences in method of polymerization and formulation. Each of formulations for the lathed lenses has about 0.25% by weight of initiator and does not contain solvent (e.g. ethanol in Formulation I as control). In addition, the formulations developed for lathing are cured at relatively low temperature. Curing temperature is not raised above 30 °C until the polymer is gelled. All of theses factors may promote high molecular weight and high conversion of monomer prior to the point of gelation. Polymer with high molecular weight and monomer conversion prior to the point of gelation is expected to yield material with good mechanical properties. In contrast, in control experiments, both formulation I and II utilize solvent and high levels of photo initiator. High initiator concentration and the use of solvent will result in low molecular weight prior to the point of gelation.

Lenses from formulation 1563-91-2 containing t-butyl styrene has a slightly higher Dk (78 barrers) than those from formulation 1563-91-1 (Dk = 74 barrers). Although both the formulation 1563-91-1 and formulation 1563-91-2 contain 10% by weight of styrenic monomer (styrene or t-butyl styrene), on a molar basis formulation 1563-91-2 contains 1.5 times less styrenic monomer than formulation 1563-91-1 does. It is believed that the bulkiness of the t-butyl moieties may be able to enhance oxygen permeability of lenses.

Extraction and Analysis of lenses from 1563-91-1 and 1563-91-2

The plasma coated lenses are subjected to extraction and extractable analysis The extracts are analyzed by GPC. Extremely low levels of polymer/macromer have been found as compared to control lenses (Formulation II). Peak areas from experimental lens extracts are indexed to peak areas of Everest control groups. The level of extractables in the lathed lenses is from about 34 to about 44 times less than the control lenses (Formulation II).

Differences in method of curing and formulations are likely causes for the differences in extractables as discussed above. Polymer from the lathed lenses is thermally cured at relatively low temperature with low initiator concentration and in the absence of solvent. All of theses factors promote high molecular weight and conversion of monomer prior to the point of gelation. All of these factors also favor lower levels of extractable material. Control lenses (Formulation II) are UV-cured in ethanol at relatively high initiator concentration. The presence of ethanol and high initiator concentration in control are likely to contribute to higher levels of extractables as compared to the lathed lenses. The polymeric extract observed by GPC is believed to be a copolymer of DMA and TRIS.

Example 6 (Production of contact lenses from bonnets)

A. A silicone hydrogel lens formulation is prepared by mixing DMA (33.8112 g), macromer prepared in Example 2 (37.9989 g), TRIS (18.1648 g), t-butyl styrene (10.0159 g) and VAZO-52 (0.2535 g). The prepared formulation is used to prepare bonnets as follows. A plastic cap is filled with about 0.75 mL of the lens formulation and then a polypropylene lens base curve mold half (FreshLook mold) is placed in the lens formulation. The lens formulation is cured in a forced air oven according to the following cure schedule: 75°C/ 2 hours (10 min ramp from 45°C set point), 110°C/ 16 hours (10 minute ramp from 75°C). Lens blanks (bonnets) with base curve (posterior) surface is lathed directly with a lath at room temperature into contact lenses as described in the previous examples. The anterior surface (front curve) of each contact lens is lathed since its base curve is directly molded. After lathing lens front curves, lenses are extracted, dried, plasma coated as described in Example 1, and then hydrated. Ion permeability (relative ionoflux diffusion coefficient, $D/D_{ref}$, in reference to Alsacon) is 0.05. Oxygen permeability is 68 barrers. The low ion permeability value is believed to be due to a skin effect that can be eliminated by removing a layer of polymer from the base curve of the silicone hydrogel.

B. A silicone hydrogel lens formulation (1575-36-1) is prepared by mixing DMA (33.8706 g), prepared in Example 2 (37.9962 g), TRIS (18.1604 g), t-butylstyrene (10.0513 g) and VAZO-52 (0.2551 g). The prepared formulation is used to prepare bonnets as follows. A plastic cap is filled with about 0.75 mL of the lens formulation, a polypropylene base curve mold half (FreshLook type, polypropylene) is placed in the lens formulation. The assemblies (each composed of a cup and a base curve mold half) with the lens formulation are leveled by placing the assemblies between two plastic plates and then placing a 5 pound lead donut on the upper plate. Lens formulation is cured at 75°C for 2 hours in a forced air oven. The assemblies are opened and the resultant bonnets resting on polypropylene base curve molds are cured for an additional 16 hours at 110°C in a forced air oven. Lenses are produced by lathing at room temperature the front curve of each bonnet as well as by removing a layer (or skin) of about 0.5 mm of material from the base curve surface of each bonnet. Lenses are extracted, plasma coated and sterilized. Lens Ion permeability (relative ionoflux diffusion coefficient, $D/D_{ref}$, in reference to Alsacon) is 2.92 while oxygen permeabiity is 65 barrers.

Removal of material from both front and back curve surfaces of bonnets ensures that skin effects are eliminated. Skin effects are believed to be the result of surface inhibition during polymerization. Adsorbed oxygen on mold surfaces can result in surface inhibition of polymerization and cause a skin to form. One can eliminate or minimize skin effects by storing plastic molds under nitrogen or argon prior to use.

C. A silicone hydrogel lens formulation is prepared by combining macromer prepared in Example 2 (190.12 g), TRIS (90.09 g), DMA (169.08 g), styrene (50.02 g) and VAZO-52 (1.2261 g). The prepared formulation is used to prepare bonnets as follows. A plastic cup is filled with about 0.6 mL of lens formulation and then zeonex base curve mold half (BOO1 type of mold design) is then placed in the lens formulation. The assembly (each composed of a cup and a base curve mold half) with the lens formulation is placed in a forced air oven and the lens formulation is cured for 2 hours at 75°C. The assemblies are separated and bonnet polymer is further cured (still on BOO1 mold) at 110°C for 16 hours. DSC analysis of silicone hydrogel polymer cut from the bonnet is analyzed by DSC (20°C/min) and has a glass transition temperature of about 64°C (2nd scan). Shore-A hardness of the sample is > 100 (off scale). Samples are lathable but it is not possible to de-block the lens from the mold. Lens formulations penetrate the molds and after curing lens banks are bonded to molds.

D. A silicone hydrogel lens formulation is prepared by combining macromer prepared in Example 2 (190.15 g), TRIS (90.05 g), DMA (169.23 g), t-butylstyrene (50.01 g) and VAZO-52 (1.2234 g). The prepared formulation is used to prepare bonnets as follows. A plastic cup is filled with about 0.6 mL of lens formulation and then a zeonex base curve mold half (BOO1 type of mold design) is then placed in the lens formulation. The assembly (each composed of a cup and a base curve mold half) with the lens formulation is placed in a forced air oven and the lens formulation is cured for 2 hours at 75°C. The assemblies are separated and bonnet polymer is further cured (still on BOO1 mold) at 110°C for 16 hours. DSC analysis of silicone hydrogel polymer cut from the bonnet is analyzed by DSC (20C/min) and has a glass transition temperature of about 59°C (2nd scan). Shore-A hardness of the sample is > 100 (off scale). Samples are lathable but it is not possible to de-block the lens from the mold. Lens formulations penetrate the molds and after curing lens banks are bonded to molds.

## Claims

1. A silicone hydrogel material, which has

   i) an oxygen permeability of at least 45 barrers,

   ii) an ion permeability **characterized** either by an Ionoton Ion Permeability Coefficient of greater than about $0.2 \times 10^{-6}$ cm$^2$/sec or by an Ionoflux Diffusion Coefficient of greater than about $1.5 \times 10^{-6}$ cm$^2$/min, and

   iii) a predominant glass transition temperature of $22 \pm 6$ °C or higher; and

which is a copolymerization product of a solvent-free polymerizable composition comprising

(a) at least one silicone-containing vinylic monomer or macromer or mixture thereof,
(b) at least one hydrophilic vinylic monomer, and
(c) at least one blending vinylic monomer in an amount of from about 5% to about 30% by weight, wherein the blending vinylic monomer is an aromatic vinylic monomer, a cycloalkyl-containing vinylic monomer, a Tg-enhancing vinylic monomer, or a mixture thereof, wherein the Tg-enhancing vinylic monomer is selected from the group consisting of acrylic acid, $C_1$-$C_{10}$ alkyl methacrylate, methacrylonitrile, acrylonitrile, $C_1$-$C_{10}$ alkyl acrylate, N-isopropyl acrylamide, 2-vinylpyridine, and 4-vinylpyridine, and

wherein the silicone hydrogel material has a water content of from about 18% to about 55% by weight when fully hydrated.

2. The silicone hydrogel material of claim 1, wherein the oxygen permeability is at least about 70 barrers.

3. The silicone hydrogel material of claim 1, wherein the blending vinylic monomer is an aromatic vinylic monomer.

4. The silicone hydrogel material of claim 3, wherein the aromatic vinylic monomer is a styrene-containing monomer.

5. The silicone hydrogel material of claim 3, wherein the aromatic vinyl monomer is styrene, 2,4,6-trimethylstyrene (TMS), t-butyl styrene (TBS), 2,3,4,5,6-pentafluorostyrene, benzylmethacrylate, divinylbenzene, or 2-vinylnaphthalene.

6. The silicone hydrogel material of claim 1, wherein the blending vinylic monomer is a vinylic monomer containing a cyclopentyl, cyclohexyl or cycloheptyl, which each can be substituted by up to 3 $C_1$-$C_6$ alkyl groups.

7. The silicone hydrogel material of claim 6, wherein the blending vinylic monomer is isobornylmethacrylate, isobornylacrylate, cyclohexylmethacrylate, cyclohexylacrylate, or mixtures thereof.

8. The silicone hydrogel material of claim 1, wherein the solvent-free polymerizable composition comprises about 0 to about 40 weight percent of a silicone-containing macromer with ethylenically unsaturated group(s); about 10 to about 30 weight percent of a siloxane-containing vinylic monomer; about 15 to about 50 weight percent of a hydrophilic vinylic monomer; and about 5 to about 20 weight percent of a blending vinylic monomer.

9. The silicone hydrogel material of claim 8, wherein the hydrophilic vinylic monomer is N,N-dimethylacrylamide (DMA), 2-hydroxyethylmethacrylate (HEMA), 2-hydroxyethyl acrylate (HEA), hydroxypropyl acrylate, hydroxypropyl methacrylate (HPMA), trimethylammonium 2-hydroxy propylmethacrylate hydrochloride, dimethylaminoethyl methacrylate (DMAEMA), glycerol methacrylate (GMA), N-vinyl-2-pyrrolidone (NVP), dimethylaminoethylmethacrylamide, acrylamide, methacrylamide, allyl alcohol, vinylpyridine, N-(1,1dimethyl-3-oxobutyl)acrylamide, acrylic acid, methacrylic acid, or a mixture thereof.

10. The silicone hydrogel material of claim 8, wherein the silicon-containing vinylic monomer is methacryloxyalkylsiloxanes, 3-methacryloxy propylpentamethyldisiloxane, bis(methacryloxypropyl)tetramethyl-disiloxane, monomethacrylated polydimethylsiloxane, monoacrylated polydimethylsiloxane, mercapto-terminated polydimethylsiloxane, N-[tris(trimethylsiloxy)silylpropyl]acrylamide, N-[tris(trimethylsiloxy)silylpropyl]methacrylamide, tristrimethylsilyloxysilylpropyl methacrylate (TRIS), or a mixture thereof.

11. A contact lens comprising a silicone hydrogel material according to any one of the preceding claims.

12. The contact lens of claim 11, wherein the contact lens has a tensile modulus of from about 0.5 to about 2.5 MPa.

13. The contact lens of claim 11, wherein the contact lens has an ophthalmically compatible hydrophilic surface obtained by using a surface modification process.

14. The contact lens of claim 12, wherein the hydrophilic surface is a plasma or LbL coating.

**Patentansprüche**

1.  Silikonhydrogel-Material, welches

    i) eine Sauerstoffdurchlässigkeit von mindestens 45 Barrers hat,
    ii) eine Ionendurchlässigkeit hat die **gekennzeichnet ist durch** entweder einen Ionoton-Ionendurchlässigkeits-koeffizienten von mehr als etwa $0.2 \times 10^{-6}$ $cm^2$/sec oder **durch** einen Ionenfluss-Diffusionskoeffizienten von mehr als etwa $1.5 \times 10^{-6}$ $cm^2$/min, und
    iii) eine vorherrschende Glasübergangstemperatur von $22 \pm 6$ °C oder höher hat; und

    welches ein Copolymerisationsprodukt einer lösungsmittelfreien polymerisierbaren Zusammensetzung ist, enthaltend

    (a) mindestens ein Silikon-enthaltendes vinylisches Monomer oder Makromer oder Mischungen daraus,
    (b) mindestens ein hydrophiles vinylisches Monomer, und
    (c) mindestens ein mischendes vinylisches Monomer in einer Menge von etwa 5 Gew.-% bis etwa 30 Gew.-%, wobei das mischende vinylische Monomer ein aromatisches vinylisches Monomer, ein Cycloalkyl-enthaltendes vinylisches Monomer, ein Tgerhöhendes vinylisches Monomer, oder eine Mischung daraus ist, wobei das Tgerhöhende vinylische Monomer ausgewählt ist aus der Gruppe bestehend aus Acrylsäure, $C_1$-$C_{10}$ Alkylmethacry-lat, Methacrylonitril, Acrylonitril, $C_1$-$C_{10}$ Alkylacrylat, N-iso-Propylacrylamid, 2-Vinylpyridin, und 4-Vinylpyridin, und

    wobei das Silikonhydrogel-Material bei vollständiger Hydratisierung einen Wassergehalt von etwa 18 Gew.-% bis etwa 55 Gew.-% hat.

2.  Silikonhydrogel-Material gemäss Anspruch 1, wobei die Sauerstoffdurchlässigkeit mindestens etwa 70 Barrers ist.

3.  Silikonhydrogel-Material gemäss Anspruch 1, wobei das mischende vinylische Monomer ein aromatisches vinylisches Monomer ist.

4.  Silikonhydrogel-Material gemäss Anspruch 3, wobei das aromatische vinylische Monomer ein Styrol-enthaltendes Monomer ist.

5.  Silikonhydrogel-Material gemäss Anspruch 3, wobei das aromatische Vinylmonomer Styrol, 2,4,6-Trimethylstyrol (TMS), t-Butylstyrol (TBS), 2,3,4,5,6-Pentafluorostyrol, Benzylmethacrylat, Divinylbenzol oder 2-Vinylnaphthalen ist.

6.  Silikonhydrogel-Material gemäss Anspruch 1, wobei das mischende vinylische Monomer ein vinylisches Monomer ist enthaltend ein Cyclopentyl, Cyclohexyl oder Cycloheptyl, welche jeweils mit bis zu drei $C_1$-$C_6$ Alkylgruppen substituiert sein können.

7.  Silikonhydrogel-Material gemäss Anspruch 6, wobei das mischende vinylische Monomer iso-Bornylmethacrylat, iso-Bornylacrylat, Cyclohexylmethacrylat, Cyclohexylacrylat, oder Mischungen daraus ist.

8.  Silikonhydrogel-Material gemäss Anspruch 1, wobei die lösungsmittelfreie polymerisierbare Zusammensetzung etwa 0 bis etwa 40 Gew.-% eines Silikonenthaltenden Makromers mit ethylenisch-ungesättigten Gruppen enthält; etwa 10 bis etwa 30 Gew.-% eines Siloxan-enthaltenden vinylischen Monomers; etwa 15 bis etwa 50 Gew.-% eines hydrophilen vinylischen Monomers; und etwa 5 bis etwa 20 Gew.-% eines mischenden vinylischen Monomers.

9.  Silikonhydrogel-Material gemäss Anspruch 8, wobei das hydrophile vinylische Monomer N,N-Dimethylacrylamid (DMA), 2-Hydroxyethylmethacrylat (HEMA), 2-Hydroxyethylacrylat (HEA), Hydroxypropylacrylat, Hydroxypropylmethacrylat (HPMA), Trimethylammonium-2-Hydroxypropylmethacrylat-Hydrochlorid, Dimethylaminoethylmethacrylat (DMAEMA), Glycerinmethacrylat (GMA), N-Vinyl-2-Pyrrolidon (NVP), Dimethylaminoethylmethacrylamid, Acrylamid, Methacrylamid, Allylalkohol, Vinylpyridin, N-(1,1-Dimethyl-3-oxobutyl)-acrylamid, Acrylsäure, Methacrylsäure oder eine Mischung daraus ist.

10. Silikonhydrogel-Material gemäss Anspruch 8, wobei das Silikon-enthaltende vinylische Monomer Methacryloxyalkylsiloxan, 3-Methacryloxypropylpentamethyldisiloxan, Bis(methacryloxypropyl)tetramethyl-disiloxan, Monomethacryliertes Polydimethylsiloxan, Monoacryliertes Polydimethylsiloxan, Mercapto-terminiertes Polydimethylsiloxane, N-[Tris(trimethylsiloxy)silylpropyl]acrylamid, N-[Tris(trimethylsiloxy)silylpropyl]methacrylamid, Tristrimethylsilyloxysilylpropyl methacrylat (TRIS), oder eine Mischung daraus ist.

**11.** Kontaktlinse enthaltend ein Silikonhydrogel-Material gemäss einem der vorangehenden Ansprüche.

**12.** Kontaktlinse gemäss Anspruch 11, wobei die Kontaktlinse ein Zug-E-Modul von etwa 0.5 bis etwa 2.5 MPa hat.

**13.** Kontaktlinse gemäss Anspruch 11, wobei die Kontaktlinse eine durch ein Oberflächenbehandlungsverfahren erhaltene ophthalmisch verträgliche hydrophile Oberfläche hat.

**14.** Kontaktlinse gemäss Anspruch 12, wobei die hydrophile Oberfläche eine Plasma- oder LbL Beschichtung ist.

**Revendications**

**1.** Matériau d'hydrogel de silicone qui a

i) une perméabilité à l'oxygène d'au moins 45 barrers,
ii) une perméabilité aux ions **caractérisée** soit par un coefficient de perméabilité aux ions Ionoton supérieur à environ 0,2 x $10^{-6}$ cm$^2$/s soit par un coefficient de diffusion Ionoflux supérieur à environ 1,5 x $10^{-6}$ cm$^2$/min, et
iii) une température de transition vitreuse prédominante de 22 $\pm$ 6 °C ou supérieure ; et

qui est un produit de copolymérisation d'une composition polymérisable sans solvant comprenant

(a) au moins un monomère ou macromère vinylique contenant de la silicone ou un mélange de ceux-ci,
(b) au moins un monomère vinylique hydrophile, et
(c) au moins un monomère vinylique de mélange à raison d'environ 5 % à environ 30 % en poids, le monomère vinylique de mélange étant un monomère vinylique aromatique, un monomère vinylique contenant un groupe cycloalkyle, un monomère vinylique améliorant la Tg ou un mélange de ceux-ci, le monomère vinylique améliorant la Tg étant sélectionné dans le groupe constitué par l'acide acrylique, le méthacrylate d'alkyle en C$_1$ à C$_{10}$, le méthacrylonitrile, l'acrylonitrile, l'acrylate d'alkyle en C$_1$ à C$_{10}$, le N-isopropyl-acrylamide, la 2-vinylpyridine et la 4-vinylpyridine, et le matériau d'hydrogel de silicone ayant une teneur en eau d'environ 18 % à environ 55 % en poids lorsqu'il est totalement hydraté.

**2.** Matériau d'hydrogel de silicone selon la revendication 1, dans lequel la perméabilité à l'oxygène est d'au moins environ 70 barrers.

**3.** Matériau d'hydrogel de silicone selon la revendication 1, dans lequel le monomère vinylique de mélange est un monomère vinylique aromatique.

**4.** Matériau d'hydrogel de silicone selon la revendication 3, dans lequel le monomère vinylique aromatique est un monomère contenant du styrène.

**5.** Matériau d'hydrogel de silicone selon la revendication 3, dans lequel le monomère vinylique aromatique est le styrène, le 2,4,6-triméthylstyrène (TMS), le t-butyl-styrène (TBS), le 2,3,4,5,6-pentafluorostyrène, le méthacrylate de benzyle, le divinylbenzène ou le 2-vinylnaphtalène.

**6.** Matériau d'hydrogel de silicone selon la revendication 1, dans lequel le monomère vinylique de mélange est un monomère vinylique contenant un groupe cyclopentyle, cyclohexyle ou cycloheptyle, chacun d'eux pouvant être substitué par jusqu'à 3 groupes alkyle en C$_1$ à C$_6$.

**7.** Matériau d'hydrogel de silicone selon la revendication 6, dans lequel le monomère vinylique de mélange est le méthacrylate d'isobornyle, l'acrylate d'isobornyle, le méthacrylate de cyclohexyle, l'acrylate de cyclohexyle ou des mélanges de ceux-ci.

**8.** Matériau d'hydrogel de silicone selon la revendication 1, dans lequel la composition polymérisable sans solvant comprend d'environ 0 à environ 40 pour cent en poids d'un macromère contenant de la silicone avec un ou plusieurs groupes éthyléniquement insaturés ; d'environ 10 à environ 30 pour cent en poids d'un monomère vinylique contenant du siloxane ; d'environ 15 à environ 50 pour cent en poids d'un monomère vinylique hydrophile et d'environ 5 à environ 20 pour cent en poids d'un monomère vinylique de mélange.

9. Matériau d'hydrogel de silicone selon la revendication 8, dans lequel le monomère vinylique hydrophile est le N,N-diméthylacrylamide (DMA), le méthacrylate de 2-hydroxyéthyle (HEMA), l'acrylate de 2-hydroxyéthyle (HEA), l'acrylate d'hydroxypropyle, le méthacrylate d'hydroxypropyle (HPMA), le chlorhydrate de 2-hydroxypropylméthacrylate de triméthylammonium, le méthacrylate de diméthylaminoéthyle (DMAEMA), le méthacrylate de glycérol (GMA), la N-vinyl-2-pyrrolidone (NVP), le méthacrylamide de diméthylaminoéthyle, l'acrylamide, le méthacrylamide, l'alcool allylique, la vinylpyridine, le N-(1,1-diméthyl-3-oxobutyl)acrylamide, l'acide acrylique, l'acide méthacrylique ou un mélange de ceux-ci.

10. Matériau d'hydrogel de silicone selon la revendication 8, dans lequel le monomère vinylique contenant de la silicone est un méthacryloxyalkylsiloxane, le 3-méthacryloxy-propylpentaméthyl-disiloxane, le bis(méthacryloxypropyl)tétraméthyldisiloxane, le polydiméthylsiloxane monométhacrylé, le polydiméthylsiloxane monoacrylé, le polydiméthylsiloxane à terminaison mercapto, le N-[tris(triméthylsiloxy)silylpropyl]acrylamide, le N-[tris(triméthylsiloxy)-silylpropyl]méthacrylamide, le méthacrylate de tristriméthylsilyloxysilylpropyle (TRIS) ou un mélange de ceux-ci.

11. Lentille de contact comprenant un matériau d'hydrogel de silicone selon l'une quelconque des revendications précédentes.

12. Lentille de contact selon la revendication 11, dans laquelle la lentille de contact a un module de traction d'environ 0,5 à environ 2,5 MPa.

13. Lentille de contact selon la revendication 11, dans laquelle la lentille de contact a une surface hydrophile ophtalmiquement compatible obtenue en utilisant un procédé de modification de surface.

14. Lentille de contact selon la revendication 12, dans laquelle la surface hydrophile est un revêtement au plasma ou couche par couche.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4312575 A
- US 4632844 A
- US 20020025389 A
- US 6451871 B
- US 774942 A
- US 09775104 B
- US 10654566 B
- US 5760100 A
- EP 632329 A
- US 5849811 A
- US 6122999 A

**Non-patent literature cited in the description**

- **Winterton et al.** The Cornea: Transactions of the World Congress on the Cornea 111. Raven Press, 1998, 273-280